(19) Europäisches Patentamt
European Patent Office
Office européen des brevets

(11) EP 1 195 391 A1

(12) EUROPEAN PATENT APPLICATION

(43) Date of publication:
10.04.2002 Bulletin 2002/15

(51) Int Cl.[7]: C08F 110/06, C08F 2/06, C08F 2/14

(21) Application number: 00203442.9

(22) Date of filing: 05.10.2000

(84) Designated Contracting States:
AT BE CH CY DE DK ES FI FR GB GR IE IT LI LU MC NL PT SE
Designated Extension States:
AL LT LV MK RO SI

(71) Applicant: ATOFINA Research
7181 Seneffe (Feluy) (BE)

(72) Inventors:
- Debras, Guy
6210 Frasnes-lez-Gosselies (BE)
- Dupire, Marc
7022 Mons (BE)
- Michel, Jacques
7181 Seneffe (BE)

# (54) Production of polypropylene

(57) A process for producing polypropylene, the process comprising homopolymerising propylene or copolymerising propylene with one or more comonomers selected from ethylene and $C_4$ to $C_{10}$ 1-olefins in the presence of a metallocene catalyst system comprising (a) a metallocene catalyst of general formula $R''(XR_m)(Cp'R'_n)MQ_2$, wherein X is a cyclopentadienyl moiety (Cp) or a heteroatom, Cp' is a substituted or unsubstituted fluorenyl ring; each R is independently hydrogen or hydrocarbyl having 1 to 20 carbon atoms in which $0 \leq m \leq 4$; each R' is independently hydrocarbyl having 1 to 20 carbon atoms in which $0 \leq n \leq 8$; R" is a bridge which comprises a $C_1$-$C_{20}$ alkylene radical, a dialkyl germanium or silicon or siloxane, or an alkyl phosphine or amine radical, which bridge is substituted or unsubstituted, M is a Group IVB transition metal, vanadium or a lanthanide metal and each Q is hydrocarbyl having 1 to 20 carbon atoms or halogen, and (b) a cocatalyst which activates the catalyst component, the homo- or co- polymerisation being performed in a slurry process in a hydrocarbon diluent for the polypropylene or being performed in a solution process in a hydrocarbon solvent for the polypropylene, the concentration of propylene monomer in the diluent or solvent being lower than 70% by weight, based on the weight of the diluent or solvent, to produce a polypropylene homopolymer or copolymer having long chain branches on the polypropylene molecules.

EP 1 195 391 A1

## Description

The present invention relates to a method for the production of polypropylene. In particular, the present invention relates to a process for the production of polypropylene having long chain branching. The present invention also relates to polypropylene having particular rheological properties.

Polypropylene resin is used in a variety of different applications. However, polypropylene resin suffers from the problem of having a low melt strength at high melt index, which restricts the use of polypropylene in a number of applications because the polypropylene is difficult to process.

Ziegler-Natta and metallocene catalysts produce linear polypropylene. Such linear polypropylene can suffer from poor melt strength. Also, metallocene catalysts can exhibit poor activity when used in a slurry process with a diluent such as hexane.

It is known in the art to increase the melt strength of polypropylene, for example by irradiating the polypropylene with an electron beam or by reactive extrusion with one or more peroxides and a co-agent such as tetra vinyl silane. It is known that electron beam irradiation or reactive extrusion significantly modifies the structure of a polypropylene molecule. Up to a certain level of irradiation dose, it is possible to produce from a linear polypropylene molecule having been produced using a Ziegler-Natta catalyst, a modified polymer molecule having free-end long branches, otherwise known as long chain branching.

It is known that such long chain branching drastically modifies the rheological behaviour of the polypropylene, for example their elongational and shear viscosity.

Polypropylene processing operations where melt strength plays an important role include blow moulding, extrusion coating, thermoforming, fibre spinning and foam extrusion. In thermoforming, a poor melt strength results in a sagging phenomenon. In fibre spinning, a poor melt strength can result in undesired movements of the fibres due to transverse forces, for example by cooling air, which ultimately can lead to "married" fibres and fibre breakage. On the other hand, a too-high melt strength will limit the achievement of low titre fibres. Accordingly, a correct balance between melt strength and drawability is desirable. For blown (biaxially oriented) or cast films also, a correct balance between melt strength and stretchability is very important. In foam extrusion, a poor melt strength results in cell rupture and non-uniform cell structure. For such an application, a poor drawability will limit the fineness of the walls.

The present invention aims to provide a process for producing polypropylene resins having long chain branching, and which can exhibit improved properties, in particular improved melt strength, and also which can be manufactured without the need for an irradiation step or reactive extrusion. It is also an aim of the invention to provide such a process which provides substantially increased long chain branching on the polypropylene molecules. It is a further aim to produce novel polypropylene resins, and in particular such resins having long chain branching which exhibit new properties.

Accordingly, the present invention provides a process for producing polypropylene, the process comprising homopolymerising propylene or copolymerising propylene with one or more comonomers selected from ethylene and $C_4$ to $C_{10}$ 1-olefins in the presence of a metallocene catalyst system comprising (a) a metallocene catalyst of general formula $R''(XR_m)$ $(Cp'R'_n)MQ_2$, wherein X is a cyclopentadienyl moiety (Cp) or a heteroatom, Cp' is a substituted or unsubstituted fluorenyl ring; each R is independently hydrogen or hydrocarbyl having 1 to 20 carbon atoms in which $O \leq m \leq 4$; each R' is independently hydrocarbyl having 1 to 20 carbon atoms in which $O \leq n < 8$; R" is a bridge which comprises a $C_1$-$C_{20}$ alkylene radical, a dialkyl germanium or silicon or siloxane, or an alkyl phosphine or amine radical, which bridge is substituted or unsubstituted, M is a Group IVB transition metal, vanadium or a lanthanide metal and each Q is hydrocarbyl having 1 to 20 carbon atoms or halogen, and (b) a cocatalyst which activates the catalyst component, the homo- or co- polymerisation being performed in a slurry process in a hydrocarbon diluent for the polypropylene or being performed in a solution process in a hydrocarbon solvent for the polypropylene, the concentration of propylene monomer in the diluent or solvent being lower than 70% by weight, based on the weight of the diluent or solvent, to produce a polypropylene homopolymer or copolymer having long chain branches on the polypropylene molecules.

The polymerisation temperature for the slurry polymerisation may be from 50 to 120°C, for example 80°C, and the pressure may be from 50 to 60 bars.

The polymerisation temperature for the solution polymerisation may be from 50 to 200°C, and the pressure may be from 5 to 100 bars.

The polymerisation period is preferably from a few minutes to several hours.

The homo- or co- polymerisation may be carried out under supercritical conditions in a slurry with the diluent. The diluent may comprise an alkane, such as a $C_1$-$C_4$ alkane or a mixture thereof. The diluent may be propane. The temperature and pressure must be above the minimum supercritical values for the diluent (and the amount of monomer present). Propane has a minimum supercritical temperature Tc of 96.8°C and a minimum supercritical pressure Pc of 41.5 bar.

The use of supercritical conditions greatly increases the activity of the metallocene catalyst. The metallocene

catalyst is selected so as to be thermally stable under such supercritical conditions. At a temperature and pressure above the supercritical values and most preferably in the absence of hydrogen, the metallocene catalyst activity may be high enough to produce polypropylene resins having very low catalyst residues and with long chain branching.

The slurry process may be a slurry loop process which is carried out in two reactors in series, optionally with one reactor operating under supercritical conditions.

Preferably, the homo- or co- polymerisations are carried out in the absence of hydrogen. Optionally, when there are two reactors in series, one reactor is operated without hydrogen to provide the high degree of long chain branching and the other is operated with hydrogen to provide higher processability, as a result of the formation of lower molecular weight molecules, for the resultant blend of the two fractions.

Preferably, the propylene is a homopolymer produced in the absence of a comonomer.

The polypropylene may be synthesised with batch, semi-continuous or continuous reactors in a slurry or solution process.

The present invention further provides a polypropylene having a branching index g less than 1 and wherein for the relationship between the loss shear modulus G'' and the storage shear modulus G', at values of the storage shear modulus G' below the value corresponding to the cross-over point, at which cross-over point the storage shear modulus G' is equal to the loss shear modulus G'' and below which the storage shear modulus G' is lower than the loss shear modulus G'', the ratio d(logG'')/d(logG') is greater than 0.9.

Preferably, the ratio d(logG'')/d(logG') is greater than 1 at values of the storage shear modulus G' below the value corresponding to the cross-over point.

The present invention yet further provides a polypropylene having a branching index g less than 1 and wherein the relationship between complex viscosity (η) and angular frequency (ω), at a value of angular frequency below the value corresponding to the cross-over point, at which cross-over point the storage shear modulus G' is equal to the loss shear modulus G'' and below which the storage shear modulus G' is lower than the loss shear modulus G'', shows an inflection point where $d^2 (\log \eta)/d (\log \omega)^2$ is zero, and below which the viscosity increases.

The present invention still further provides a polypropylene having a branching index g less than 1 and wherein for the relationship between tan δ, where tan δ is the ratio G''/G', and angular frequency (ω), at a value of angular frequency ω below the value corresponding to the cross-over point, at which cross-over point the storage shear modulus G' is equal to the loss shear modulus G'' and below which the storage shear modulus G' is lower than the loss shear modulus G'', there is a maximum in the curve where the value of d(tan δ)/dω is zero.

The polypropylene may be isotactic polypropylene or syndiotactic polypropylene.

The present invention is predicated on the discovery by the present inventors that when polymerising propylene to form isotactic or syndiotactic polypropylene, if a metallocene catalyst having a fluorenyl moiety is employed in combination with a low concentration of propylene monomer, this tends to enhance the formation of long chain branching in the polypropylene molecules. This is particularly enhanced in the absence of hydrogen. Without being bound by theory, it is believed that the low propylene monomer concentration tends to provide an enhanced level of grafting of branches onto the growing unsaturated polypropylene molecules at the expense of reduced monomer incorporation. In contrast, when polypropylene is polymerised in a regular slurry bulk process or in a supercritical propylene process, the isotactic polypropylene is unbranched because the competition between propylene monomers and unsaturated polypropylene chains for their incorporation into the chains is largely in favour of the propylene monomer insertion.

The polypropylene is produced using a metallocene catalyst having a fluorenyl substituent, which preferably is selected from:

> (Me2C(3-tertiary-Butyl-5-Me-Cp)(Flu)ZrCl2; isopropyl-cyclopentadienyl-fluorenyl zirconium dichloride; and $(Ph_2C)((Me_3Si)Cp)(Flu)ZrCl_2$.

The Cp is a substituent cyclopentadienyl which is unsubstituted or substituted with, for example, $Ph_2CH$, $Me_3C$, $Me_3Si$, Me, Me and $Me_3C$,Me and $SiMe_3$, Me and Ph, or Me and $CH_3$-CH-$CH_3$.

The Cp' is a substituent fluorenyl which is unsubstituted or substituted, for example, with each R' being independently $YR'_3$ in which Y is C or Si and each R' is independently H or hydrocarbyl having 1 to 20 carbon atoms.

The heteroatom X may be, for example, N, P, S or O.

The structural bridge R'' is generally an alkylene radical having 1 to 20 carbon atoms, a dialkyl germanium or silicon or siloxane, alkyl phosphine or amine, preferably Me-C-Me, Ph-C-Ph,-$CH_2$-, Et-C-Et, Me-Si-Me, Ph-Si-Ph or Et-Si-Et.

The metal M is preferably Zr or Hf and each Q is preferably Cl.

The cocatalyst which activates the metallocene catalyst component can be any cocatalyst known for this purpose such as an aluminium-containing cocatalyst or a boron-containing cocatalyst. The aluminium-containing cocatalyst may comprise an alumoxane, for example methyl aluminium oxane, in an amount such that Al/M = 10-2000. In the slurry loop process, using supported metallocene catalyst, a cocatalyst is injected into the reactor, for example

selected from tri-isobutyl aluminium (TIBAL) or triethyl aluminium (TEAL).

The alumoxanes used in the process of the present invention are well known and preferably comprise oligomeric linear and/or cyclic alkyl alumoxanes represented by the formula:

$$\text{(I)}\quad R-(\underset{\substack{|\\ R}}{Al}-O)_n-AlR2$$

for oligomeric, linear alumoxanes and

$$\text{(II)}\quad (-\underset{\substack{|\\ R}}{Al}-O-)_m$$

For oligomeric, cyclic alumoxane,
wherein n is 1-40, preferably 10-20, m is 3-40, preferably 3-20 and R is a $C_1$-$C_8$ alkyl group and preferably methyl.

Generally, in the preparation of alumoxanes from, for example, aluminium trimethyl and water, a mixture of linear and cyclic compounds is obtained.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B $Ar_1$ $Ar_2$ $X_3$ $X_4$]- as described in EP-A-0277004 (page 6, line 30 to page 7, line 7).

Most preferably, the concentration of the propylene monomer in the solvent or diluent is from 30 to 60% by weight, based on the weight of the solvent or diluent.

In the solution polymerisation process, the solvent is a liquid able to dissolve the polymer formed, at the temperature and pressure used for polymerisation and typical solvents include toluene, xylene, cyclohexane and isopar (a mixture of saturated isoparaffins). The metallocene catalyst is preferably used unsupported in the solution process. For toluene, cyclohexane and isopar, the respective polymerisation temperature ranges are given by the solubility of formed PP which is a function of the nature of the solvent, the temperature, the pressure and the type of PP which is produced.

In the slurry polymerisation process, typical diluents include hydrocarbons with 1 to 6 carbon atoms such as propane, isobutane, pentane or hexane. The metallocene catalyst system may be employed in a slurry loop process, and the catalyst may be used supported on an inert support. The inert support may comprise a porous solid support such as talc, inorganic oxides and resinous support materials such as polyolefin. Preferably, the support material is an inorganic oxide in its finally divided form.

Suitable inorganic oxide materials which are desirably employed in accordance with this invention include Group 2a, 3a, 4a or 4b metal oxides such as silica, alumina and mixtures thereof. Other inorganic oxides that may be employed either alone or in combination with the silica, or alumina are magnesia, titania, zirconia, and the like. Other suitable support materials, however, can be employed, for example, finely divided functionalized polyolefins such as finely divided polyethylene. Preferably, the support is a silica having a surface area comprised between 200 and 900 m2/g and a pore volume comprised between 0.5 and 4 ml/g.

The amount of alumoxane and metallocenes usefully employed in the preparation of the solid support catalyst can vary over a wide range. Preferably the aluminium to transition metal mole ratio is in the range between 1:1 and 100:1, preferably in the range 5:1 and 50:1.

The order of addition of the metallocenes and alumoxane to the support material can vary. In accordance with a preferred embodiment of the present invention alumoxane dissolved in a suitable inert hydrocarbon solvent is added to the support material slurried in the same or other suitable hydrocarbon liquid and thereafter a mixture of the metallocene catalyst component is added to the slurry.

Preferred solvents include mineral oils and the various hydrocarbons which are liquid at reaction temperature and which do not react with the individual ingredients. Illustrative examples of the useful solvents include the alkanes such as pentane, iso-pentane, hexane, heptane, octane and nonane; cycloalkanes such as cyclopentane and cyclohexane; and aromatics such as benzene, toluene, ethylbenzene and diethylbenzene.

Preferably the support material is slurried in toluene and the metallocene and alumoxane are dissolved in toluene prior to addition to the support material.

In accordance with the invention, propylene and any optional alpha-olefinic comonomer are supplied to the reactor containing the metallocene catalyst. Typical comonomers include ethylene, butene, 4-methyl-1-pentene and 1-hexene. Hydrogen may be additionally supplied to the reactor, but most preferably no hydrogen is present during the polymerisation. Because the metallocene catalyst component of the present invention exhibits good comonomer response as well as good hydrogen response, substantially all of the comonomer, when present, is consumed.

The MFI of the polypropylene made in accordance with the present invention typically falls in the range 0.1 to 2000 g/10', preferably in the range 0.5 to 1000 g/10'. The melting temperature of the polypropylene is typically above 85°C, most preferably above 100°C. The polypropylene preferably has a weight average molecular weight (Mw) in the range 5 to 5000 kDa, more preferably from 20 to 1000 kDa. The polydispersity index (D) preferably ranges from 2 to 25. The long chain branching facilitates processing of the polypropylene.

The CpFlu catalysts employed in accordance with embodiments of the present invention may be prepared broadly in accordance with the method of Razavi and Ferrara as published in Journal of Organometallic Chemistry, 435(1992) pages 299 to 310.

The polypropylene may be an isotactic polypropylene or a syndiotactic polypropylene. Most particularly, the polypropylene has been polymerised using a metallocene catalyst, in particular an isotactic polypropylene polymerised using a metallocene catalyst (hereinafter referred to as "miPP"). The polypropylene or polypropylene blend may have a monomodal molecular weight distribution or a multimodal molecular weight distribution, for example a bimodal molecular weight distribution.

This production of higher melt strength polypropylene enables the polypropylene to be used in a variety of different applications where melt strength is required when the polymer is processed from the melt, for example in blow moulding, blowing of films, extrusion thermoforming and in the production of foams.

The polypropylene may be a homopolymer of propylene or a random or block copolymer of propylene and one or more olefins selected from ethylene and $C_4$ to $C_{10}$ 1-olefins, which may be linear or branched. For example, the polypropylene may be an ethylene-propylene random copolymer containing up to 10wt% ethylene. The polypropylene homopolymer may be used as a matrix phase which is toughened by rubber particles, for example ethylene-propylene rubber particles, typically in an amount of up to 30wt%.

Following polymerisation, the polypropylene may be washed with an acidic solution of an alcohol, for example methanol or isopropanol to precipitate it from a solvent for homogeneous polymerisation. The fluff is treated with conventional antioxidant additives to stabilise the polypropylene.

Thereafter the polyolefin is mechanically processed in the melt, e.g. by extrusion, and granulated.

In accordance with a preferred aspect of the invention, the polypropylene has increased melt strength. This particular rheological property provides an outstanding processing behaviour which allows the polypropylene based polymers produced in accordance with the invention to be suitable particularly for producing films, sheets, fibres, pipes, foams, hollow articles, panels and coatings.

The invention will now be described in greater detail with reference to the following non-limiting examples and the accompanying drawings, in which:-

Figure 1 is a graph showing the relationship between the storage shear modulus log G'' and the loss shear modulus log G' for polypropylenes produced in accordance with Example 1 and Comparative Examples 1 and 5;

Figure 2 is a graph showing the relationship between complex viscosity η and angular frequency ω for polypropylenes produced in accordance with Examples 1, 2 and 3 of the process of the invention and Comparative Examples 1, 2 and 5;

Figure 3 is a graph showing for Examples 1, 2 and 3 and Comparative Examples 1, 2 and 5 the relationship between tan δ and angular frequency ω.

The present invention will now be described in greater detail with reference to the following non-limiting Examples.

EXAMPLES 1 AND 2

In these Examples, an isotactic polypropylene homopolymer was produced using a metallocene catalyst (thereby producing miPP representing metallocene-synthesised isotactic polypropylene) comprising Me2C(3-tertiary-butyl-5-methyl-cyclopentadienyl) (fluorenyl) zirconium dichloride, the polymerisation having been performed without

the addition of hydrogen gas during the polymerisation process. The polymerisation was performed in a 3 litre laboratory batch reactor containing an amount of solvent or diluent and an amount of propylene monomer. The reactor had been purged at 110°C under nitrogen for 1 hour, and then cooled to the reaction temperature of 80°C. In Examples 1 and 2 the catalyst was in an amount of, respectively, 20mg and 52mg. In each case the cocatalyst was methyl aluminium oxane (MAO) in an amount of 850ppm by weight based on the amount of diluent. The MAO was added as 1.5ml of a 30wt% solution in toluene. In Example 1 the polymerisation was carried out using toluene as a solvent, with there being 1 litre of toluene and 1 litre of propylene. In Example 2, the polymerisation was carried out using isobutane as a diluent, with there being 1 litre of isobutane and 1 litre of propylene. In each Example therefore, the volume ratio of propylene monomer to solvent or diluent was 50/50. The reaction temperature was 80°C and the pressure was 30 bar. The reaction time was 1 hour. The reaction was terminated by venting the unreacted monomer. No hydrogen or comonomer was fed.

For Example 1, 30 gram of polypropylene fluff was obtained after polymerisation by being washed with an acidic solution of isopropanol to precipitate the polymer and dried. The yield of the homogeneous (unsupported) polymerisation was 1525gPP/g catalyst. For Example 2, the polypropylene fluff was recovered directly after polymerisation and dried. The yield of the homogeneous (unsupported) polymerisation was 11500gPP/g catalyst.

In all of the Examples and Comparative Examples, the fluff was stabilised with an anti-oxidant additive, comprising 5000ppm, based on the weight of the fluff, of an anti-oxidant available in commerce from CIBA Speciality Chemicals under the trade name Irganox B215.

The resultant miPP had a melt flow index (MFI) of around 320 dg/min for Example 1 and around 700dg/min for Example 2. In this specification, the melt flow index (MFI) is measured by the procedure of ASTM D 1238 using a load of 2.16kg at a temperature of 230°C for polypropylene. NMR analysis yielded an mmmmm pentad of 82% and 79% respectively for Examples 1 and 2.

The properties of the polypropylene of Examples 1 and 2 are shown in Table 1.

The molecular weight distribution was determined by gel permeation chromatography. This resulted in a value for Mw, the weight average molecular weight, and a value for the polydispersity index (D) which is Mw/Mn, where Mn is the number average molecular weight. For the gel permeation chromatography of branched molecules, the measured molecular weight tends to be underestimated compared to linear molecules.

It is known that a strong increase of melt viscosity (η) at low frequency is observed for polypropylene containing long chain branching structures. The relationship between the shear viscosity of the polypropylene melt and the circular frequency is dependent upon the degree of long chain branching.

In order to quantify the amount of long chain branching in isotactic and syndiotactic polypropylene, the applicant has formulated a parameter, referred to herein as the branching factor g, which is determined from the rheological properties of the polymer. The long chain branching factor g was established by the ratio Mw (COP)/Mw (η0) where Mw (COP) is the weight average molecular weight calculated from the cross-over point coordinates ($W_c$ and $G_c$) (as discussed hereinbelow) and Mw (η0) is the weight average molecular weight calculated from zero shear viscosity. The branching factor is equal to 1 ± 0.1 for linear isotactic or syndiotactic polypropylene and is less than 1 for isotactic or syndiotactic polypropylene with long chain branching. The branching factor g is determined from the ratio of two weight average molecular weight ($M_w$) values inferred from a dynamic frequency sweep on a viscoelastimeter such as the models available in commerce under the trade names RDA 700 or ARES 700 from the company Rheometrics Scientifics.

The branching factor is determined as follows. For the viscoelastimeter available from Rheometrics Scientifics under the trade name ARES, the operating conditions were set up as follows: the strain was set up to be from 10 to 20%, i.e. in the linear viscoelastic range; the frequency sweep was from 0.1 to 500 radians/second; the plate-plate geometry was 25mm diameter, with a polymer thickness therebetween of typically around 2mm. In some instances, the same testing experiment was conducted at different melt temperatures, for example at 190°C and 210°C, and the viscoelastic responses expressed at the reference temperature of 230°C using a master curve approach, which is described in the paper entitled "Temperature dependence of polyolefin melt rheology", H. Mavridis and R.N. Shroff, Polymer Eng. Sci. 32, 1778 (1992).

From the data obtained, the storage (G') and loss (G'') shear moduli, as well as the complex shear melt viscosity (η*) were plotted as a function of circular frequency at the reference temperature of 230°C. A cross-over point (COP) for the storage and loss shear moduli was observed for all the isotactic polypropylenes investigated. The cross-over point (COP) coordinates G' = G'' = $G_c$ and the corresponding circular frequency $W_c$ of the cross-over point, or when there is more than one cross-over point at the cross-over point of highest frequency, can be used to infer information pertaining to the weight average molecular weight $M_w$ and its polydispersity as first proposed in the paper by G.R. Zeichner and P.D. Patel, Proc. 2nd World Cong. Chem. Eng. 6, 333 (1981).

The applicants tested 33 linear isotactic polypropylenes with $M_w$ values ranging from 70 kDa to 1200 kDa and polydispersity index (D = $M_w/M_n$) values of from 2 to 25 and found the following equation for the molecular weight at the cross-over point to apply:

$$M_w\ (COP) = \exp\ (6.767\text{-}0.187{*}(LnWc)\text{-}0.0129{*}(LnWc)^2)\ \text{(for isotactic PP)}$$

The weight average molecular weight (Mw) is specified in kDa, and is calculated with a standard deviation estimated to be around 5%.

For the value $M_w$ (η0) which is the weight average molecular weight at zero shear viscosity, this is calculated as follows. From the shear viscosity curve, it is possible to extrapolate the viscosity to the zero shear rate viscosity using an equation known as the Carreau-Yasuda equation which is described in the paper entitled "Correlation Between Molecular Structure and Rheological Behaviour of Polypropylene", K. Bernreitner, W. Neissl and M. Gahleitner, Polymer Testing, 11, 89 (1992). As is well known in the literature, a power law relationship exists between $\eta_0$ and $M_w$. Accordingly, using the same data as set out for the cross-over point, the following equation for the weight average molecular weight at zero shear viscosity has been determined:

$$M_w(\eta_0)=\exp\ (3.5897+0.267{*}Ln(\eta_0))\ \text{(for isotactic PP)}$$

Similar equations relating Mw to COP and no can be derived for syndiotactic polypropylene (sPP).

The weight average molecular weight $M_w$ is expressed in kDa with a standard deviation around 6%. The viscosity is expressed in Pascal. seconds.

The branching factor g for any given isotactic or syndiotactic polypropylene is the ratio between the calculated value $M_w$ (COP) and $M_w(\eta_0)$.

In the Examples and Comparative Examples, the rheological measurements were performed on a Rheometrics apparatus at 230°C (0.01 - 1000 radians/second maximum range when using master curves).

For Examples 1 and 2 the activation energy Ea was determined and was respectively 58 and 48 kJ/mol. These relatively high energy values indicate significant long chain branching. For linear isotactic polypropylenes, the activation energy Ea is between 37 and 42 kJ/mol.

The branching factor g was determined for Examples 1 and 2 and gave respective values of 0.61 and 0.5. These are significantly less than the value of 1 for linear polypropylene.

For each of the polypropylenes of Examples 1 and 2, the relationship between the logarithmic values of G'' and G' were determined and for Example 1 results are shown in Figure 1. In accordance with the invention, for the relationship between the loss shear modulus G'' and the storage shear modulus G', at values of the storage shear modulus G' below the value corresponding to the cross-over point, at which cross-over point the storage shear modulus G' is equal to the loss shear modulus G'' and below which the storage shear modulus G' is lower than the loss shear modulus G'', the ratio d(logG'')/d(logG') is greater than 0.9. For Figure 1, the slope of the curve in the low frequency region (low G' below around 100 Pa) the slope was 2.04. The corresponding slope for Example 2 was 1.7. The existence of a slope in the plot of log G'' versus log G' which is greater than 1 indicates the presence of significant long chain branching. This is in contrast with polypropylene having long chain branching obtained by a post reactor process such as irradiation or the addition of peroxide plus a co-agent, which gives a slope of 0,7 to 0.9, compared to a scope of from 0.6 to 0.7 for linear isotactic polypropylene.

The polypropylene polymers of this invention exhibit rheological features that can be ascribed to the presence of long chain branching structures, for example a branching factor g below 0.9, in contrast to the value for linear polypropylenes which is 1 +/- 0.1, an activation energy Ea above 42 kJ/mol for isotactic PP, and a slope in the log G''-log G' curve above 0.7 for G' values below the crossover point, typically below 100 Pa.

Moreover, the polypropylenes produced in accordance with the invention exhibit particular flow curves in the relationship between complex viscosity and frequency, namely the presence of a sigmoidal curve with a yield stress at low frequency. Thus as shown in Figure 2, when the value of the complex viscosity is plotted against frequency for the polypropylenes of Examples 1 and 2, there is an inflection point in the plot at values below about 2 radians per second leading to a significant increase (greater than 10%) in the complex viscosity at lower frequencies. Thus the polypropylenes exhibit a yield point in their flow curve at low frequencies, and the shear viscosity can no longer be described by the Carreau-Yasuda equation. This was manifested by a sigmoidal shape for the plot representing the relationship between complex viscosity and frequency. Such a sigmoidal curve is represented mathematically wherein for the relationship between complex viscosity (η) and angular frequency (ω), at a value of angular frequency below the value corresponding to the cross-over point, at which cross-over point the storage shear modulus G' is equal to the loss shear modulus G'' and below which the storage shear modulus G' is lower than the loss shear modulus G'', the value of $d^2(\log\eta)/d(\log\omega)^2$ is zero. This characteristic distinguishes the polypropylenes produced in accordance with this invention from those of high melt strength polypropylenes containing long chain branching produced by irradiation or reactive extrusion with peroxides and possibly co-agents. In contrast, such known high melt strength polypropylenes having long chain branching do not exhibit a yield point in the flow curve and do not exhibit a sigmoidal flow curve. Rather, the value of the complex viscosity levels off to a maximum value at low frequencies below around 2 radians per second.

As discussed in the paper entitled "Long chain branching and viscoelasticity of ethylene-propylene-diene elastomers", Kautschukt & Gummi Kunststoffe, Volume 44, page 128, 1991 by H.C. Booij, a lower difference between the phase angle at 0.1 and 100 radians per second in the time-temperature region close to the terminal relaxation of linear chains means more long chain branching in the polypropylene. The viscoelastic damping is represented by the value tan δ (the ratio G''/G') for the polypropylene produced in accordance with the present invention having a maximum in the value of tan δ at low frequency, namely at frequencies below the cross-over point where G'' is greater than G'. This is represented mathematically wherein for the relationship between tan δ, where tan δ is the ratio G''/G', and angular frequency (ω), at a value of angular frequency ω below the value corresponding to the cross-over point, at which cross-over point the storage shear modulus G' is equal to the loss shear modulus G'' and below which the storage shear modulus G' is lower than the loss shear modulus G'', the value of d(tan δ)/dω is zero. This is illustrated in Figure 3 where for the polypropylenes of both Example 1 and Example 2, a maximum value for tan δ is found lower than a frequency value of 100 radians per second. In contrast, for linear polypropylenes and high melt strength polypropylenes produced by irradiation, a continuous increase of the damping parameter tan δ is observed for frequencies below the cross-over point defined by the frequency at which G' equals G'' and below which G'' is greater than G'. For a given value of frequency, the damping increases as the molecular weight increases. At constant values of MFI, the samples with long chain branching have lower damping than the linear sample. For the polypropylene of Example 1, the damping parameter tan δ at 0.1 radius per second is below that of the most branched polypropylene sample and the maximum in tan δ was observed at 25 radians per second below the frequency of the cross-over point (900 radians per second).

Furthermore, the polypropylenes exhibiting long chain branching produced in the course of the invention also exhibit more than one cross-over point (COP) constituted by a critical frequency where the storage shear modulus G' and the loss shear modulus G'' are equal. The additional crossover points are at frequencies below the classical cross-over point frequency exhibited by linear polypropylene molecules or by polypropylene of high melt strength which have been irradiated or subjected to treatment by peroxides.

The isotactic polypropylenes produced in accordance with Examples 1 and 2 both exhibit several cross-over points.

EXAMPLE 3

In this Example, syndiotactic polypropylene (sPP) was produced using 41.58 litres of cyclohexane as diluent to which 30 weight percent propylene as monomer had been added. After introduction of the catalyst, comprising 75 mg of isopropyl-cyclopentadienyl-fluorenyl zirconium dichloride and a cocatalyst comprising MAO in an amount of 120 ml added in three steps, the polymerisation proceeded for a period of two hours at a temperature of 55°C. The amount of sPP obtained was 5160 grams, representing a yield of 69067 gPP/g catalyst.

The properties of the polypropylene are summarised in Table 1.

This sPP exhibited a flow curve exhibiting a yield point for the relationship between the complex viscosity and frequency, three cross-over points, a maximum in tan δ below the cross-over point and a high slope in the log G''/log G' curve.

COMPARATIVE EXAMPLE 1

In this Comparative Example, a catalyst comprising (Me2Si(2Me-Benzyl-Indenyl)2ZrCl2 on a support of MAO-treated silica was employed in bulk propylene monomer to yield an isotactic polypropylene having the properties shown in Table 1. The relationship between log G'' and log G' is shown in Figure 1. It may be seen that below a value of log G' being 100Pa, the slope of the plot is less than 1 (0.62). The relationship between complex viscosity and frequency is shown in Figure 2. It may be seen that there is no yield point at low frequency. The relationship between tan δ and frequency is shown in Figure 3. It may be seen that there is no maximum value for tan δ at a frequency below 100 radians/second.

COMPARATIVE EXAMPLE 2

In this Comparative Example, the same catalyst as that of Example 1 was employed in an amount of 13mg to produce isotactic polypropylene. However, the polymerisation was performed in the absence of toluene as a solvent. Instead, polymerisation was performed solely in liquid propylene monomer. Thus, two litres of propylene were introduced into the reactor. After a reaction period of thirty minutes, 218g of isotactic propylene fluff were obtained. The

properties of the polypropylene produced are summarised in Table 1. The relationship between complex viscosity and frequency is shown in Figure 2. It may be seen that there is no yield point at low frequency. The relationship between tan δ and frequency is shown in Figure 3. It may be seen that there is no maximum value for tan δ at a frequency below 100 radians/second.

COMPARATIVE EXAMPLE 3

In this Comparative Example, a catalyst comprising 2.5mg of benzyl indenyl zirconium dichloride was added to two litres of propylene monomer in the reaction vessel of Example 1. The reaction was stopped after a period of twenty minutes because of the high yield, namely 230,000g/g catalyst. The isotactic polypropylene also had the properties indicated in Table 1.

COMPARATIVE EXAMPLE 4

In this Comparative Example, Comparative Example 3 was repeated but with one litre of toluene being substituted for one litre of propylene monomer (to give a 50/50 volume ratio of propylene to solvent) and with the catalyst being present in an amount of 0.7mg. The isotactic polypropylene recovered had the properties summarised in Table 1.

COMPARATIVE EXAMPLE 5

The polypropylene of this Comparative Example comprised a high melt strength polypropylene available in commerce from Montell under the trade name PROFAX 813. It may be seen from Figure 3 that this polypropylene did not exhibit a maximum in the value of tan δ at frequencies below 100 radians per second. Also, no inflection is detected in the flow curve (Figure 2) and the slope in the graph G'' versus G' is below 0.9 (Figure 1 and Table 1). This result emphasises the difference in molecular structure between polypropylenes produced in accordance with the invention and known high melt strength polypropylenes also with long chain branching.

With the exception of the Comparative Example 5, in all of the other Comparative Examples, it may be seen that the activation energy Ea is lower than 42 kJ/mol indicating that the polypropylene molecules produced have a low degree of long chain branching and are substantially linear. The polypropylenes of the Comparative Examples 1 to 4 also have a branching index g which is around 1, indicating linearity of the polypropylene molecules. For each of Comparative Examples 1 to 4, the slope of the plot of log G'' against log G' is less than 0.7, again indicating linearity. For none of the polypropylenes produced in accordance with the Comparative Examples 1 to 4 was there a yield in the flow curve or a maximum in the tan δ / frequency graph. Furthermore, none of the polypropylenes produced in accordance with the Comparative Examples exhibited several cross-over points in the plot between both G' and G'' and frequency. The Comparative Examples 1 to 4 show that when isotactic polypropylene is synthesised in bulk (i.e. with high concentration of propylene monomer) with cyclopentadienyl fluorenyl (CpFlu) or other catalysts, or synthesised in solution with bisindenyl catalysts, the isotactic polypropylene does not show any significant rheological features of long chain branching. Rather, the polypropylenes behave like typical linear polypropylenes.

TABLE 1

| Sample | $M_w$ (kDa) | $D=M_w/M_n$ | MFI (dg/min) | g | Slope log G″- log G′ | Yield in flow curve | Max in tan δ | Several COPs | Ea (kJ/mol) | % Diluent or Solvent | Catalyst Family |
|---|---|---|---|---|---|---|---|---|---|---|---|
| Example 1 | 93 | 4.4 | 320 | 0.61 | 2.04 | Yes | Yes | Yes | 58 | 50 | Flu |
| Example 2 | 59.3 | 2.7 | 700 | 0.5 | 1.7 | Yes | Yes | Yes | 48 | 50 | Flu |
| Example 3 | 100 | 3 | 30 | 0.5 | 1.7 | Yes | Yes | Yes | -* | 30 | Flu |
| Comparative Example 1 | 100 | 5.5 | 390 | 1.05 | 0.62 | No | No | No | 38 | 0 | Benzyl Indenyl |
| Comparative Example 2 | 341 | 3.5 | 1.6 | 0.98 | 0.68 | No | No | No | 40 | 0 | Flu |
| Comparative Example 3 | 373 | 3.3 | 2.8 | 0.98 | 0.63 | No | No | No | 38 | 0 | Benzyl Indenyl |
| Comparative Example 4 | 202 | 4.3 | 16.2 | 0.95 | 0.63 | No | No | No | 38 | 50 | Benzyl Indenyl |
| Comparative Example 5 | 404 | 9.5 | 3 | 0.49 | 0.85 | No | No | No | 78 | - | - |

* not measured

## Claims

1. A process for producing polypropylene, the process comprising homopolymerising propylene or copolymerising propylene with one or more comonomers selected from ethylene and $C_4$ to $C_{10}$ 1-olefins in the presence of a metallocene catalyst system comprising (a) a metallocene catalyst of general formula $R''(XR_m)$ $(Cp'R'_n)MQ_2$, wherein X is a cyclopentadienyl moiety (Cp) or a heteroatom, Cp' is a substituted or unsubstituted fluorenyl ring; each R is independently hydrogen or hydrocarbyl having 1 to 20 carbon atoms in which $O \leq m < 4$; each R' is independently hydrocarbyl having 1 to 20 carbon atoms in which $O \leq n \leq 8$; R" is a bridge which comprises a $C_1$-$C_{20}$ alkylene radical, a dialkyl germanium or silicon or siloxane, or an alkyl phosphine or amine radical, which bridge is substituted or unsubstituted, M is a Group IVB transition metal, vanadium or a lanthanide metal and each Q is hydrocarbyl having 1 to 20 carbon atoms or halogen, and (b) a cocatalyst which activates the catalyst component, the homo- or co- polymerisation being performed in a slurry process in a hydrocarbon diluent for the polypropylene or being performed in a solution process in a hydrocarbon solvent for the polypropylene, the concentration of propylene monomer in the diluent or solvent being lower than 70% by weight, based on the weight of the diluent or solvent, to produce a polypropylene homopolymer or copolymer having long chain branches on the polypropylene molecules.

2. A process according to claim 1 wherein for the slurry polymerisation the polymerisation temperature is from 50 to 120°C and the pressure is from 5 to 60 bars.

3. A process according to claim 2 wherein the diluent is at least one hydrocarbon having from 1 to 6 carbon atoms.

4. A process according to claim 3 wherein the diluent is at least one $C_3$ to $C_6$ alkane.

5. A process according to claim 1 wherein for the solution polymerisation the polymerisation temperature is from 50 to 200°C and the pressure is from 5 to 100 bars.

6. A process according to claim 5 wherein the solvent is selected from at least one of toluene, xylene, cyclohexane and isopar.

7. A process according to any foregoing claim wherein the homo- or co- polymerisations are carried out in the absence of hydrogen.

8. A process according to any foregoing claim wherein the homo- or co-polymerisation is carried out in two reactors in series.

9. A process according to claim 8 wherein a first reactor is operated without hydrogen and a second reactor is operated with hydrogen.

10. A process according to any foregoing claim wherein the polypropylene is synthesised in at least one batch, semi-continuous or continuous reactor in a slurry or solution process.

11. A process according to claim 2, 3 or 4, or any one of claims 7 to 10 when appendant on claim 2, wherein the homo- or co- polymerisation is carried out under supercritical conditions in a slurry with the diluent.

12. A process according to claim 11 wherein the diluent comprises a $C_1$-$C_4$ alkane or a mixture thereof.

13. A process according to claim 12 wherein the diluent is propane.

14. A process according to any foregoing claim wherein the slurry process is a slurry loop process which is carried out in two reactors in series.

15. A process according to claim 14 wherein one reactor is operated under supercritical conditions.

16. A process according to any foregoing claim wherein X comprises a cyclopentadienyl moiety (Cp).

17. A process according to claim 16 wherein the catalyst comprises Me2C(3-tertiary-butyl-5-methyl-cyclopentadienyl) (fluorenyl) zirconium dichloride.

**18.** A process according to claim 16 wherein the catalyst comprises isopropyl-cyclopentadienyl-fluorenyl zirconium dichloride.

**19.** A process according to any foregoing claim wherein the concentration of propylene monomer in the diluent or solvent is from 30 to 50% by weight, based on the weight of the diluent or solvent.

**20.** A polypropylene having a branching index g less than 1 and wherein for the relationship between the loss shear modulus G'' and the storage shear modulus G', at values of the storage shear modulus G' below the value corresponding to the cross-over point, at which cross-over point the storage shear modulus G' is equal to the loss shear modulus G'' and below which the storage shear modulus G' is lower than the loss shear modulus G'', the ratio d (logG'')/d(logG') is greater than 0.9.

**21.** A polypropylene according to claim 20 wherein the ratio d(logG'')/d(logG') is greater than 1 at values of the storage shear modulus G' below the value corresponding to the cross-over point.

**22.** A polypropylene having a branching index g less than 1 and wherein the relationship between complex viscosity (η) and angular frequency (ω), at a value of angular frequency below the value corresponding to the cross-over point, at which cross-over point the storage shear modulus G' is equal to the loss shear modulus G'' and below which the storage shear modulus G' is lower than the loss shear modulus G'', shows an inflection point where $d^2(\log \eta)/d(\log \omega)^2$ is zero and below which the viscosity η increases.

**23.** A polypropylene having a branching index g less than 1 and wherein for the relationship between tan δ, where tan δ is the ratio G''/G', and angular frequency (ω), at a value of angular frequency ω below the value corresponding to the cross-over point, at which cross-over point the storage shear modulus G' is equal to the loss shear modulus G'' and below which the storage shear modulus G' is lower than the loss shear modulus G'', there is a maximum in the curve where the value of d(tan δ)/dω is zero.

**24.** A polypropylene according to any one of claims 20 to 23 which is an isotactic polypropylene or a syndiotactic polypropylene.

**25.** A polypropylene according to any one of claims 20 to 24 wherein the polypropylene is a homopolymer of propylene.

**26.** A polypropylene according to any one of claims 20 to 25 wherein the polypropylene is a random or block copolymer of propylene and one or more olefins selected from ethylene and $C_4$ to $C_{10}$ 1-olefins, which may be linear or branched.

**27.** A polypropylene according to any one of claims 20 to 26 wherein the MFI of the polypropylene is in the range 0.1 to 2000 g/10'.

**28.** A polypropylene according to any one of claims 20 to 27 wherein the melting temperature of the polypropylene is above 85°C.

**29.** A polypropylene according to any one of claims 20 to 28 wherein the polypropylene has a weight average molecular weight (Mw) in the range 5 to 5000 kDa.

**30.** A polypropylene according to any one of claims 20 to 29 wherein the polydispersity index (D) of the polypropylene ranges from 2 to 25.

Figure 1

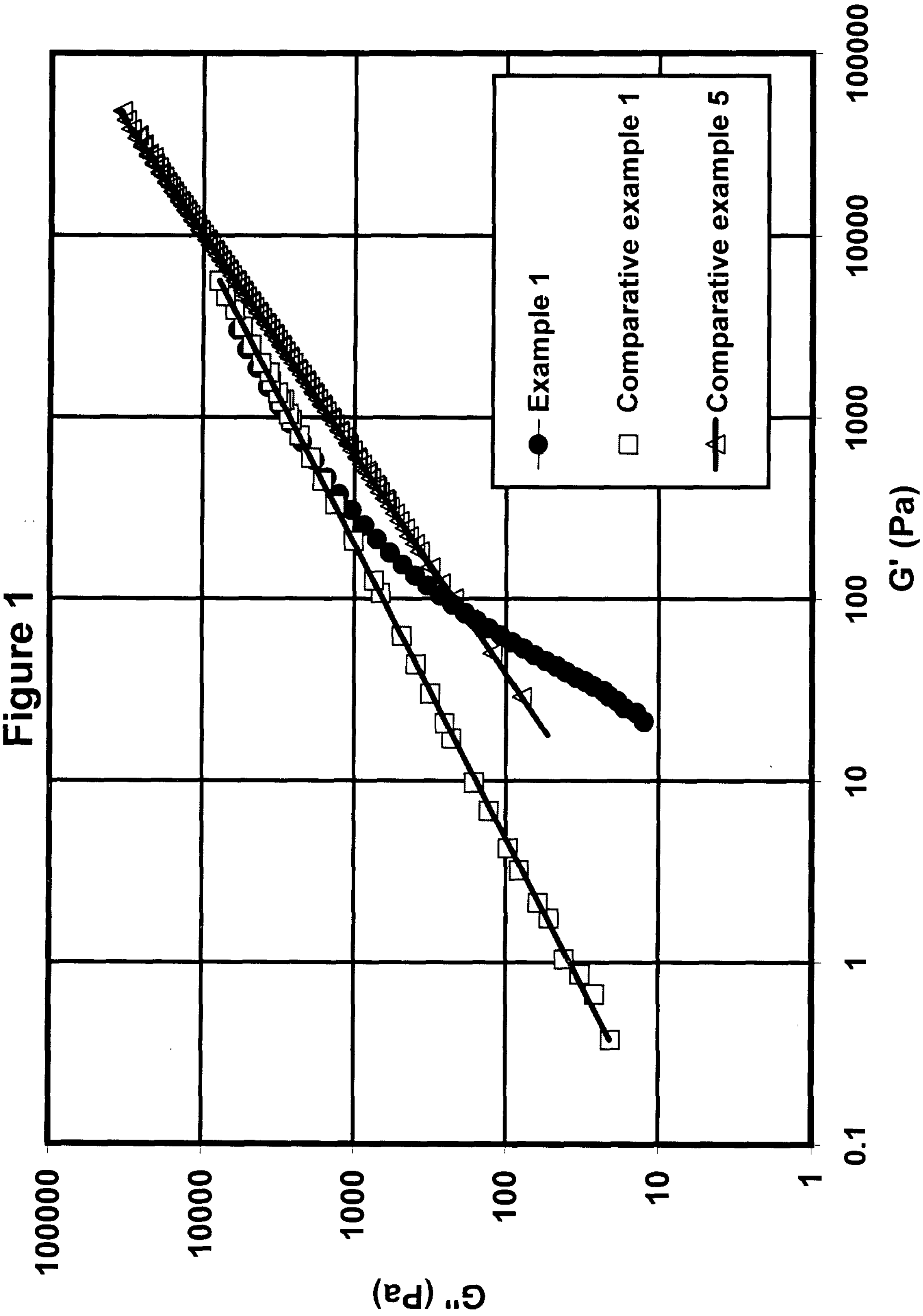
Example 1
Comparative example 1
Comparative example 5
G' (Pa)
G'' (Pa)
0.1
1
10
100
1000
10000
100000

Figure 2

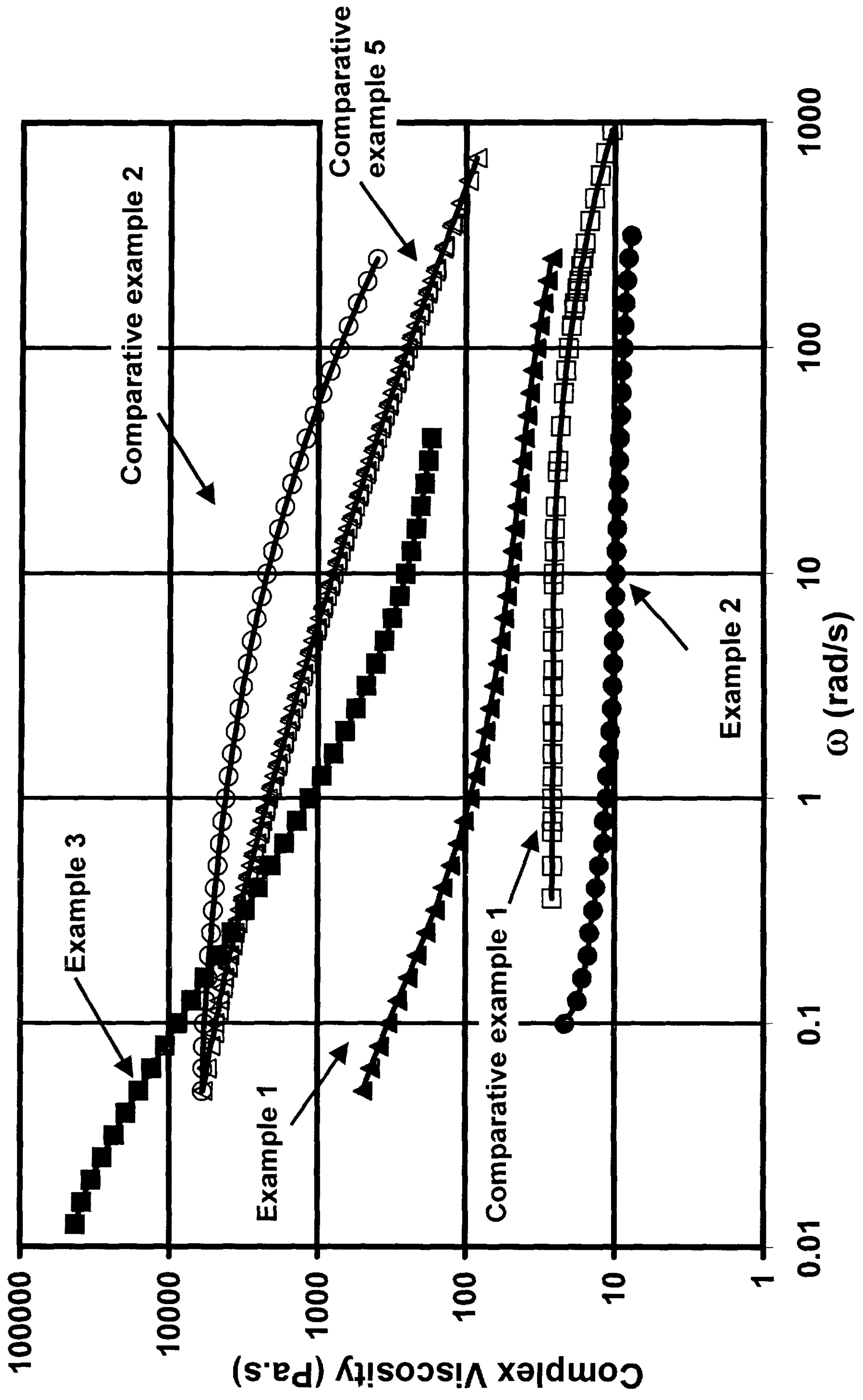
Comparative example 2
Comparative example 5
Example 3
Example 1
Comparative example 1
Example 2
100000
10000
1000
100
10
1
Complex Viscosity (Pa.s)
0.01
0.1
1
10
100
1000
ω (rad/s)

Figure 3

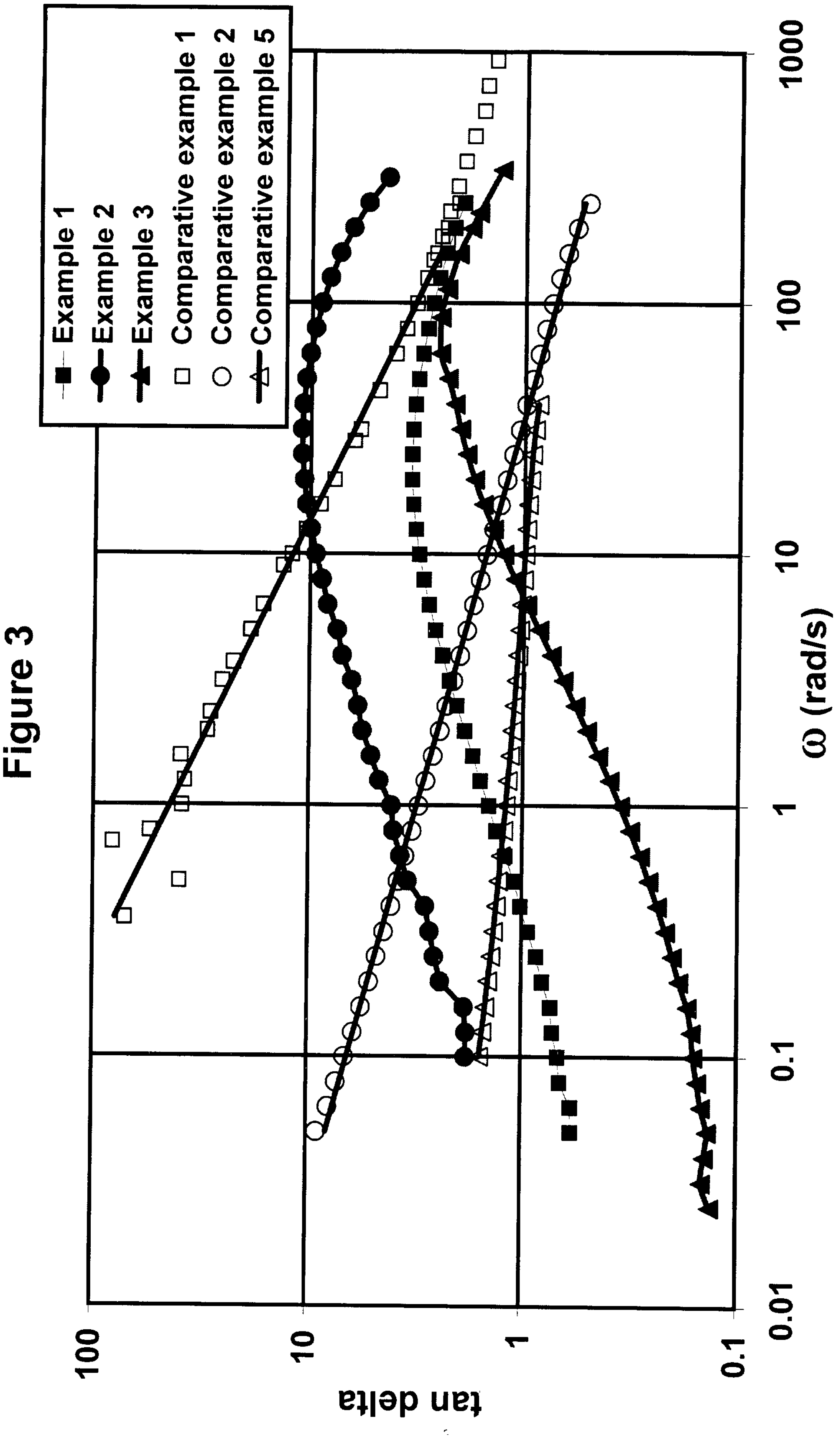
Example 1
Example 2
Example 3
Comparative example 1
Comparative example 2
Comparative example 5
tan delta
100
10
1
0.1
0.01
0.1
1
10
100
1000
ω (rad/s)

European Patent Office

# EUROPEAN SEARCH REPORT

Application Number
EP 00 20 3442

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 12572 A (EXXON CHEMICAL PATENTS INC) 9 March 2000 (2000-03-09) * claims; examples * | 1-30 | C08F110/06 C08F2/06 C08F2/14 |
| X | US 6 060 567 A (CHUM PAK-WING STEVE ET AL) 9 May 2000 (2000-05-09) * column 3, line 33 - column 4, line 45 * * column 8, line 28; claims * | 1-19 | |
| X | WO 99 41289 A (DOW CHEMICAL CO) 19 August 1999 (1999-08-19) * page 5, line 24 - page 13, line 4 * * page 18, line 24; claims * | 1-19 | |
| X | WO 99 02540 A (BOREALIS AS ;REPO TIMO (FI); LESKELAE MARKKU (FI)) 21 January 1999 (1999-01-21) * page 2, line 11 - line 12 * | 1 | |
| X | EP 0 190 889 A (HIMONT INC) 13 August 1986 (1986-08-13) * claims; examples * | 20-30 | TECHNICAL FIELDS SEARCHED (Int.Cl.7) |
| X | EP 0 678 527 A (CHISSO CORP ;JAPAN ATOMIC ENERGY RES INST (JP)) 25 October 1995 (1995-10-25) * claims * | 20-30 | C08F |

The present search report has been drawn up for all claims

| Place of search | Date of completion of the search | Examiner |
|---|---|---|
| THE HAGUE | 23 February 2001 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 20 3442

This annex lists the patent family membersrelating to the patent documents cited in the above–mentioned European search report.
The members are as contained in the European Patent Office EDP file on
The European Patent Office is in no way liable for these particulars which are merely given for the purpose of information.

23-02-2001

| Patent document cited in search report | Publication date | Patent family member(s) | Publication date |
|---|---|---|---|
| WO 0012572 A | 09-03-2000 | NONE | |
| US 6060567 A | 09-05-2000 | US 5665800 A | 09-09-1997 |
| | | US 5380810 A | 10-01-1995 |
| | | US 5272236 A | 21-12-1993 |
| | | US 5525695 A | 11-06-1996 |
| | | US 5783638 A | 21-07-1998 |
| | | US 6136937 A | 24-10-2000 |
| | | US 5986028 A | 16-11-1999 |
| | | CA 2120766 A | 29-04-1993 |
| | | DE 9219090 U | 25-09-1997 |
| | | DE 9219173 U | 25-03-1999 |
| | | DE 69220077 D | 03-07-1997 |
| | | DE 69220077 T | 20-11-1997 |
| | | DE 69228265 D | 04-03-1999 |
| | | DE 69228265 T | 02-06-1999 |
| | | EP 0608369 A | 03-08-1994 |
| | | EP 0783006 A | 09-07-1997 |
| | | EP 0899278 A | 03-03-1999 |
| | | EP 0899279 A | 03-03-1999 |
| | | ES 2103976 T | 01-10-1997 |
| | | ES 2127030 T | 01-04-1999 |
| | | FI 941727 A | 31-05-1994 |
| | | JP 2963199 B | 12-10-1999 |
| | | JP 7500622 T | 19-01-1995 |
| | | US 5427807 A | 27-06-1995 |
| | | US 5562958 A | 08-10-1996 |
| | | US 5395471 A | 07-03-1995 |
| | | WO 9308221 A | 29-04-1993 |
| | | US 5582923 A | 10-12-1996 |
| | | US 5674342 A | 07-10-1997 |
| | | US 5685128 A | 11-11-1997 |
| | | US 5591390 A | 07-01-1997 |
| | | US 5773155 A | 30-06-1998 |
| | | US 5595705 A | 21-01-1997 |
| | | US 5852152 A | 22-12-1998 |
| | | US 5677383 A | 14-10-1997 |
| | | US 6140442 A | 31-10-2000 |
| | | US 5972444 A | 26-10-1999 |
| | | US 5847053 A | 08-12-1998 |
| | | US 5863665 A | 26-01-1999 |
| | | US 6111023 A | 29-08-2000 |
| | | US 5278272 A | 11-01-1994 |
| WO 9941289 A | 19-08-1999 | AU 2240999 A | 30-08-1999 |
| | | BR 9907987 A | 17-10-2000 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 00 20 3442

This annex lists the patent family membersrelating to the patent documents cited in the above-mentioned European search report.
The members are as contained in the European Patent Office EDP file on
The European Patent Office is in no way liable for these particulars which are merely given for the purpose of information.

23-02-2001

| Patent document cited in search report | Publication date | Patent family member(s) | Publication date |
|---|---|---|---|
| WO 9941289 A | | EP 1054910 A | 29-11-2000 |
| WO 9902540 A | 21-01-1999 | FI 972946 A | 12-01-1999 |
| | | AU 8341498 A | 08-02-1999 |
| | | EP 0994885 A | 26-04-2000 |
| EP 0190889 A | 13-08-1986 | AT 88196 T | 15-04-1993 |
| | | AU 616106 B | 17-10-1991 |
| | | AU 5215890 A | 19-07-1990 |
| | | AU 597241 B | 31-05-1990 |
| | | AU 5284386 A | 07-08-1986 |
| | | AU 7942891 A | 12-09-1991 |
| | | BR 8600413 A | 14-10-1986 |
| | | CA 1280543 A | 19-02-1991 |
| | | CN 86100791 A,B | 04-02-1987 |
| | | CN 1041769 A,B | 02-05-1990 |
| | | DE 3688258 A | 19-05-1993 |
| | | DE 3688258 T | 29-07-1993 |
| | | IN 166935 A | 11-08-1990 |
| | | IN 170549 A | 11-04-1992 |
| | | JP 7045551 B | 17-05-1995 |
| | | JP 62121704 A | 03-06-1987 |
| | | NO 860330 A | 01-08-1986 |
| | | NO 167039 B | 17-06-1991 |
| | | PT 81945 A,B | 01-02-1986 |
| | | RU 2031906 C | 27-03-1995 |
| | | US 5731362 A | 24-03-1998 |
| | | US 4916198 A | 10-04-1990 |
| | | US 5554668 A | 10-09-1996 |
| | | US 5591785 A | 07-01-1997 |
| | | ZA 8600528 A | 24-09-1986 |
| EP 0678527 A | 25-10-1995 | JP 7292024 A | 07-11-1995 |
| | | DE 69503422 D | 20-08-1998 |
| | | DE 69503422 T | 11-02-1999 |
| | | US 5560886 A | 01-10-1996 |

EPO FORM P0459

For more details about this annex : see Official Journal of the European Patent Office, No. 12/82